# EUROPEAN PATENT SPECIFICATION

(11) **EP 3 936 749 B1**
(45) Date of publication and mention of the grant of the patent: **17.04.2024**
(21) Application number: 20184328.1
(22) Date of filing: 06.07.2020
(51) Int. Cl.: F16L 1/20, F16L 1/24, F16L 3/233, F16L 9/19, H02G 1/10, F16L 101/30, F03D 13/25, E02B 17/00, H01B 7/14, H01B 7/22, H01B 9/00

(54) **METHOD FOR INSTALLING A GAS TRANSPORTATION ARRANGEMENT**
VERFAHREN ZUM INSTALLIEREN EINER GASTRANSPORTANORDNUNG
PROCÉDÉ D'INSTALLATION D'UN AGENCEMENT DE TRANSPORT DE GAZ

(43) Date of publication of application: 12.01.2022
(73) Proprietor: Siemens Gamesa Renewable Energy A/S, 7330 Brande (DK)
(72) Inventor: Soerensen, Johnny, 6920 Videbæk (DK)
(74) Representative: SGRE-Association

(56) References cited:
- EP-A1- 2 018 477
- US-A1- 2005 277 347
- US-A1- 2010 012 342
- US-A1- 2010 054 677
- US-B1- 6 357 966

## Description

The invention relates to a method for installing a gas transportation arrangement on a seabed between an offshore facility and at least one further facility.

On the sea, energy may be generated for instance using offshore wind farms that convert wind into electrical energy. For transportation of the energy, electrical cables may be connected to the offshore wind farms for transporting the electrical energy from the wind farm to the shore for feeding it into a power grid. However, to bridge the large distance of often several kilometres between the offshore wind farm and the shore with the electrical connections, long cables with comparatively high installation costs are required.

An alternative way of transporting an energy source from an offshore wind turbine is by utilizing the power produced in the wind turbine in a gas producing facility placed offshore in the vicinity of the wind turbine. The energy produced by the wind turbine may be for instance used in an electrolysis process for generation of hydrogen and/or oxygen. These gases can be used afterwards for generation of electrical energy in fuel cells and for the production of chemicals, for instance other gaseous products such as ammonia or methane. The transport of the gases, in particular of the hydrogen, by using a pipe system is less expensive than transporting electricity directly to shore, or to a utility grid, respectively.

The challenge with such gas pipelines is that they need to be secured to the seabed, in particular to prevent them from flowing upwards due to the buoyancy of the gas pipeline. It is known to plough such pipelines into the seabed, so that they may remain covered by sea ground in the seabed. However, the seabed is constantly changing due to water currents or other factors including local seismic activity like earthquakes. Therefore, gas pipelines arranged unsecured on or in the seabed bear a risk of becoming exposed to the surroundings over time and eventually start flow towards the water surface. A usage of pipelines that are made of a high-density material and/or with a high wall thickness that prevents them from flowing is an expensive solution, in particular when large distances between two offshore facilities, or an offshore facility and an onshore facility, respectively, have to be bridged. From the state of the art, different measures for fixating structures on the seabed are known.

In EP 3 290 763 A1, an apparatus for jacketing a cable is known. The apparatus comprises a supply unit for supplying a jacket element from a storage unit and for fixating the jacket element to a portion of the cable. As jacket elements, concrete elements can be used, which increase the weight of the cable and ensure a fixation of the cable on the seabed. WO 2018/197030 A1 discloses a method of laying empty pipes on the seabed, wherein the empty pipes are arranged in a bundle together with at least one bundle-strengthening element. As bundle-strengthening elements, steel wires and/or communication cables are used. In the empty pipes, electrical power cables can be inserted by pushing or pulling and/or by the use of water pressure to push the power cables along the empty tubes.

From EP 3 086 424 A1, a method for offshore installing of power cables for wind turbine installations is known. The power cables are installed by use of empty tubes between several offshore positions by pushing and/or pulling the power cables through the empty pipes arranged on the seabed.

Document US 6 357 966 B1 discloses an underwater pipeline installation apparatus comprising at least one ballast tube adapted to receive a ballast mixture and multiple primary ballast weights attached to the pipeline with multiple tensioned bands as a means of rendering said primary weights and said ballast tube and pipeline into a fixed bundle for the disposition to the bed of a body of water. The introduction of a ballast mixture, possessing a relative density which is greater than that of the water in which the said pipeline bundle is placed, is introduced into at least one of the ballast tubes, said ballast tube having been adapted to receive such a ballast mixture by the installation of single or multiple ports, said ballast mixture to establish the final ballast weight of the pipeline by displacing the water within said ballast tube.

It is an object of the invention to provide an improved method for installing a gas transportation arrangement on a seabed, which in particular allows for an installation with a reduced effort.

According to the invention, this object is solved by a method according to claim 1.

The gas transportation arrangement comprises as components at least one gas transportation tube and at least one weight means, wherein the gas transportation tube and the weight means are coupled prior to lowering the gas transportation arrangement to the seabed, wherein a further tube at least partly filled with a liquid medium is used as weight means extending almost entirely over the distance bridge by the gas transportation tube.

The gas transportation tube may be used for gas transportation between the offshore facility and the at least one further facility, which may be also an offshore facility or an onshore facility. The gas transportation tube can be used for transportation of different types of gases. It is also possible that multiple gas types are transported, in particular by providing at least one separate gas transportation tube for each type of gas transported in the gas transportation arrangement. It is in particular possible that the offshore facility is an electrolysis facility powered by electrical energy generated for instance by offshore wind turbines connected to the offshore facility. During the electrolysis process, hydrogen and/or oxygen are produced as gases, which can be transported for instance to an onshore facility as further facility for usage and/or storage of the produced gases. Also other gases, for instance methane and/or ammonia, may be transported between an offshore facility and at least one further facility using the gas transportation arrangement. Combining the at least one gas transportation tube to a weight means prior to the installation of the gas transportation arrangement on the seabed has the advantage that by the combination of the gas transportation tube with the weight means a stable fixation of the gas transportation arrangement and the weight means on the seabed can be achieved simultaneously. The weight means in particular counteracts the buoyancy of the at least one gas transportation tube of the gas transportation arrangement, so that no flowing of the gas transportation tube in the water occurs.

By providing a further tube at least partly filled with a liquid medium as weight means, it is advantageously possible that the weight means is also used for a transport of electrical energy, or a transport of a fluid medium, respectively, between the offshore facility and the at least one further facility. The further tube filled with a liquid medium may provide a large weight to the gas transportation arrangement allowing to counteract a buoyancy also for a larger number of gas transportation tubes. A further tube filled with a liquid medium allows for the insertion of an electrical power cable into the further tube after installation of the gas transportation arrangement on the seabed.

The usage of at least one further tube filled at least partly with a liquid medium as weight means has the advantage that a plurality of connections, in particular for gas transport, transport of electrical energy and/or of at least one additional medium, between the offshore facility at the further facility may be installed simultaneously so that in particular all required connections may be installed at once. This reduces both the effort and the cost for installation of these connections.

Almost the entire distance between the offshore facility and the further facility is bridged by the gas transportation tube and the weight means, especially the distance underwater between the offshore facility and the further facility, in particular the portion of this distance, in which the gas transportation arrangement is arranged on or in the seabed is entirely bridged by both the gas transportation tube and the weight means. At the offshore facility or at the further facility, respectively, the gas transportation tube and a weight means used for transport of a medium or electrical power, respectively, may be separated from each other and connected to different devices and/or transport arrangements, respectively.

In a preferred embodiment of the invention, at least one gas transportation tube adapted for hydrogen transport is used, in particular a gas transportation tube comprising a tube wall with at least a hydrogen blocking portion is used, and/or at least one gas transportation tube adapted for methane transport and/or at least one gas transportation tube adapted for ammonia transport is used. The gas transportation tube may consist of various materials such as steel or plastic. The tube comprises preferably an inner and/or outer hydrogen blocking portion, or sealing, respectively, to prevent the gas to escape the gas transportation tube.

The hydrogen blocking portion can be a coating provided to an inner surface and/or an outer surface of the gas transportation tube. The hydrogen blocking portion may be for instance a gas-tight membrane material, which is wrapped or taped to an inner surface and/or an outer surface of the tube. As membrane material, for instance a metal like aluminium may be used. The tube may consist of plastic, in particular of polyethylene (PE) or high-density polyethylene (HDPE). Preferably, a gas transportation tube comprises an inner layer and an outer layer of HDPE, wherein in between the inner layer and the outer layer a hydrogen blocking portion provided as a metal layer, in particular a layer made of steel, stainless steel, aluminium of other metal, is arranged as hydrogen blocking portion. The composition of the materials of the gas transportation tube may be different in the end sections of the gas transportation tube, where the gas transportation tube is connected to termination parts for entry into a structure or the like of the offshore facility, or the further facility, respectively.

In a preferred embodiment of the invention, the further tube is arranged in the gas transportation tube, around the gas transportation tube or adjacent to the gas transportation tube. A liquid medium filled in the further tube may surround the gas transportation tube arranged in the further tube. Vice versa, the further tube filled with the medium may be arranged inside the gas transportation tube, so that after installation, the further tube is at least partly surrounded by a gas transported in the gas transportation tube. Also an adjacent arrangement of the further tube to the gas transportation tube is possible, in particular when more than one gas transportation tube and/or more than one further tube are used. By arranging the tubes adjacent to each other, the coupling of the tubes for forming the gas transportation arrangement is facilitated.

Preferably, as medium filled in the further tube and/or as a medium filled in the gas transportation tube, water, oil, and/or a suspension comprising water and a sediment, in particular water and a clay, is used. By providing a further tube filled with a material like water, the weight of the gas transportation arrangement can be increased, in particular when further weight means are used to increase the weight of the gas transportation arrangement to exceed the density of seawater. Besides water, also liquids comprising a higher density than water can be used to fill the further tube and/or the gas transportation tube, for instance an oil with a density exceeding the density of water and/or a suspension comprising water and a sediment may be used to increase the weight, or the density, respectively, of the gas transportation arrangement. As a combination of water and a sediment, for instance water with a clay such as bentonite may be used. By using such media, the gas transportation tube and/or the further tube can be used as ballast during the lowering of the gas transportation arrangement. Furthermore, the density of the gas transportation arrangement can be adjusted to facilitate the lowering of the gas transport arrangement onto the seabed and/or to ensure a stable resting of the gas transportation arrangement on the seabed, in particular during the installation process.

After lowering of the gas transportation arrangement on the seabed, the liquid medium used as filling material of the further tube is removed from the further tube. After arrangement of the gas transportation arrangement on or in the seabed, the liquid medium used as filling material of the further tube is removed from the tube so that the further tube is used for arrangement of an electrical conductor in the further tube.

The removal of the medium from the tube is in particular possible after a fixation of the gas transportation arrangement on or in the seabed. The usage of water has the advantage that it can be easily removed from the tube afterwards to allow for transportation of another type of fluid in the further tube used as weight means. Also a suspension comprising water and a sediment may be removed after installation of the gas transportation arrangement to enable the arrangement of an electrical conductor in the further tube.

Preferably, the further tube is connected to a medium providing arrangement of the offshore facility and/or of the further facility, wherein the medium providing arrangement is adapted to provide a tempering medium, a consumable medium and/or a maintenance medium to the further tube. The further tube may be connected to the medium providing arrangement in particular after lowering the gas transportation arrangement to the seabed. The medium providing arrangement may provide for instance a tempering medium for heating and/or cooling of the gas transportation arrangement, in particular for cooling an electrical power cable of the gas transportation arrangement and/or for heating and/or cooling of the at least one gas transportation tube. Also, a switching between different media transported in the further tube is possible, for instance by the usage of valves of the medium providing arrangement.

It is also possible that a consumable medium required at the offshore facility and/or the further facility is provided using the further tube or at least one of the further tubes used as weight means during the installation of the gas transportation arrangement. For instance, water can be provided to an electrolysis apparatus at the offshore facility as a consumable medium to allow for electrolysis of unsalted water not available at the offshore location of the offshore facility. As a maintenance medium, for instance oil or another lubricant may be provided to the offshore facility and/or the further facility. The oil may be for instance used in a wind turbine of the offshore facility or the oil may be provided from the offshore facility to further wind turbines connected to the offshore facility.

Preferably, at least one communication cable, at least one metal cable, at least one cable-like measurement device and/or at least one supporting structure are used as components of the gas transportation arrangement, wherein the communication cable, the cable-like measurement device, the metal cable and/or the supporting structure are coupled to the gas transportation tube and/or the weight means prior to a lowering of the gas transportation arrangement on the seabed.

The communication cable may be for instance a glass fibre cable or a bundle of glass fibres, respectively, which is coupled to the gas transportation tube, or the weight means, respectively. With the communication cable, a communication between the offshore facility and the at least one further facility may be established. The cable-like measurement device may be for instance a temperature measurement device, for instance comprising glass fibres used for a temperature measurement and/or a temperature sensor connected to cables allowing for a temperature measurement in the gas transportation arrangement.

A temperature sensor can be used in particular in combination with a further tube used for providing a cooling and/or a heating medium after installation of the gas transportation arrangement, so that a desired temperature of the gas transportation arrangement controlled by the measurement device can be obtained. Alternatively or additionally, the cable-like measurement device, in particular a cable-like measurement device comprising glass fibres, may be used for vibration detection in order to detect seabed activities and/or an undesired contact of the gas transportation arrangement with a vehicle. Such a contact may occur in particular with an anchor of a vessel that is dragged over the seabed.

As a supporting structure, a strut or a grid-like structure may be used to fixate a relative position of the at least one gas transportation tube, the at least one weight means and/or further components of the gas transportation arrangement. The supporting structure can be used in particular in a gas transportation arrangement comprising a plurality of components with different diameters and/or different cross-sectional shapes. By usage of one or more supporting structures, a stable fixation of the components towards each other can be obtained. In particular, the supporting structures may be used to establish fixed distances between at least some of the components.

In preferred embodiment of the invention, the components of the gas transportation arrangement are arranged in a bundle, in particular a bundle with an essentially circular, essentially oval, essentially triangular or essentially quadrangular cross-sectional area. The components of the gas transportation arrangement may be in particular arranged in such manner that a high packing density of a cross-sectional area of the bundle is achieved, for instance by placing components with smaller diameters in between two or more components with larger diameters.

Preferably, a plurality of gas transportation tubes may be arranged adjacent in a circular shape around an electrical power conductor arranged in the centre of the bundle. Also, the diameter of a further tube used a weight means may differ from the diameter of a gas transportation tube, so that the components can be bundled to achieve a high packing density of a cross-sectional area of the gas transportation arrangement. It is also possible that two or more further tubes with different diameters are used.

Preferably, the components of the gas transportation arrangement are coupled using at least one coupling means, wherein as coupling means in particular an adhesive connection, a bonded connection, a band fastener and and/or a tape is used. A gas transportation tube and/or a further tube which comprise at least an outer shell comprising a metal may be bonded or welded together, for instance by electrofusion. A coupling can also occur by using an adhesive connection as coupling means, wherein an adhesive is applied between two or more components of the gas transportation arrangement to establish a fixation, or a coupling, respectively, between these components.

Coupling means as band fasteners, in particular steel band fasteners, and/or tapes may be applied to an outer surface of the gas transportation arrangement to hold the components of the gas transportation arrangement together in a fixed and stable bundle. Therefore, band fasteners may be wrapped around the outer circumference of the gas transportation arrangement in a certain distance to each other to obtain a coupling between the components over the entire length of the gas transportation arrangement. Also, one or more tapes can be wound around an outer surface of the gas transportation arrangement for establishing a coupling of the components of the gas transportation arrangement.

In a preferred embodiment of the invention, the components of the gas transportation arrangement are coupled by a shield layer surrounding an outer circumference of the gas transportation arrangement. The shield layer may comprise for instance steel rods embedded in a flexible embedding material, for instance an outer serving comprising yarn and/or bitumen. The shield layer surrounding the outer circumference of the gas transportation arrangement also protects the components of the gas transportation arrangement from environmental influences at the seabed.

In a preferred embodiment of the invention, the gas transportation arrangement is lowered to the seabed from a vessel, wherein the gas transportation arrangement is provided on the vessel in a coupled state or wherein the components of the gas transportation arrangement are provided at least partly separated, wherein the components are coupled on the vessel, in particular by using a coupling apparatus. The gas transportation arrangement can be provided on the vessel in a coupled state, so that the gas transportation arrangement can be directly lowered from the vessel on the seabed. Alternatively, the gas transportation arrangement can be provided at least partly separated, wherein a coupling of the components of the gas transportation arrangement, or a coupling of groups of already coupled components of the gas transportation arrangement, respectively, occurs on the vessel prior to a lowering of the gas transportation arrangement on the seabed. This is in particular advantageous if the gas transportation arrangement comprises a large number of components, so that a provision and/or a transport of an already coupled gas transportation arrangement is difficult and/or cumbersome.

For coupling of the components of the gas transport arrangement, a coupling apparatus may be used, wherein the coupling apparatus may comprise for instance a tensioner for tensioning the components and/or a coupling means applicator for automatically applying a coupling means and/or a shield layer to the components. Alternatively, the components may be coupled manually on the vessel.

Preferably, the gas transportation arrangement or the components of the gas transportation arrangement are provided wound up on at least one storage drum and/or turntable arranged on the vessel. The gas transportation arrangement may be provided in a coupled state wound up on at least one storage drum on the vessel, so that the gas transportation arrangement can be unspooled from the storage drum and lowered to the seabed from the vessel. Correspondingly, also the components of the gas transportation arrangement may be provided wound up on one or more storage drums, so that the components of the gas transportation arrangement may be unspooled from the at least one storage drum, coupled on the vessel using for instance a coupling apparatus as previously described and then lowered on the seabed from the vessel.

A further tube is used as weight means, wherein the gas transportation arrangement is arranged floating on a sea surface prior to a filling of the further tube with the liquid medium. The gas transport arrangement may be dragged on the sea surface by a vessel, wherein by filling the liquid medium into the further tube used as a weight means, the weight, or the density, respectively, of the gas transportation arrangement may be increased to lower it from the sea surface to the seabed. The gas transportation arrangement may be arranged on the sea surface for instance on the entire or almost the entire distance between the offshore facility and the further facility.

Preferably, prior to lowering of the gas transportation arrangement on the seabed, a trench is formed on the seabed, wherein the gas transportation arrangement is arranged in the trench. The trench may be ploughed or excavated prior to the arrangement of the gas transportation arrangement. It is in particular possible that the trench is ploughed or excavated directly prior to the lowering of the gas transportation arrangement, in particular by a plough or an excavation apparatus drawn by the vessel used for transportation and lowering of the gas transportation arrangement. Alternatively, the trench can be formed using a vessel different from the vessel used for lowering the gas transportation arrangement or an autonomous excavation vehicle, so that the trench may be formed independently of the lowering of the gas transportation arrangement.

After positioning the gas transportation arrangement in the trench, the trench may be closed by filling it with soil and/or sea ground, so that the gas transportation arrangement remains in the seabed. This is in particular advantageous in combination with weight means and/or gas transportation tubes comprising a liquid used only for installation of the gas transportation arrangement on the seabed, since by fixing the gas transportation arrangement on or in the seabed by closing the trench, an updrift of the gas transportation arrangements due to the buoyancy of the gas transportation tubes is prevented. Advantageously, at least one further tube used as weight means can then be used for another purpose.

In a preferred embodiment of the invention, after arrangement of the gas transportation arrangement on the seabed, a measurement instrument is moved through a tube of the gas transportation arrangement, wherein the measurement instrument measures a course of the gas transportation arrangement. The tube, in which the measurement instrument is inserted, may be the gas transportation tube or a further tube used as weight means. The measurement instrument is then moved at least once through the tube of the gas transportation arrangement for measuring a course of the gas transportation arrangement. The measurement of the course of the gas transportation arrangement allows for checking if the arrangement of the gas transportation arrangement on the seabed was conducted correctly. Preferably, a measurement instrument comprising at least one gyroscope sensor and/or an instrument body movable by applying a fluid pressure to the tube is used. The measurement instrument may be for instance a so-called pig adapted for so-called intelligent pigging, which may be inserted in the tube and driven by applying a fluid pressure, in particular a water or oil pressure, respectively, to the tube. The measurement instrument may comprise a gyroscope sensor measuring accelerations along three orthogonal axes, so that based on these accelerations, a course of the tube in which the measurement device is moved, or a course of the gas transportation arrangement, respectively, may be determined.

Preferably, as offshore facility, an electrolysis facility is used, wherein gas produced by the electrolysis facility is transported using the gas transportation arrangement. The electrolysis facility may comprise an electrolyser adapted for performing electrolysis on sea water and/or on water provided using at least one further tube of the gas transportation arrangement. As technique used for the electrolysis, alkaline electrolysis, proton exchange membrane (PEM) electrolysis, anion exchange membrane (AEM) electrolysis and/or high temperature electrolysis (HTEL) may be used. Depending on the type of an electrolysis and/or the technology used for splitting water in the electrolysis process, one or more of the further tubes used as weight means during the installation of the gas transportation arrangement may be used for providing fresh water for the electrolysis.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of the method for installing a gas transportation arrangement according to the invention,
- Fig. 2: an embodiment of a gas transportation tube for a gas transportation arrangement,
- Fig. 3: an embodiment of an electrical power cable for a gas transportation arrangement,
- Fig. 4-Fig. 20: embodiments of gas transportation arrangements which may be installed using the method according to the invention,
- Fig. 21: an embodiment of a vessel which may be used in an embodiment of the method according to the invention, and
- Fig. 22: an embodiment of a vessel which may be used in an embodiment of the method according to the invention, and
- Fig. 23: a gas transportation arrangement in an installed state.

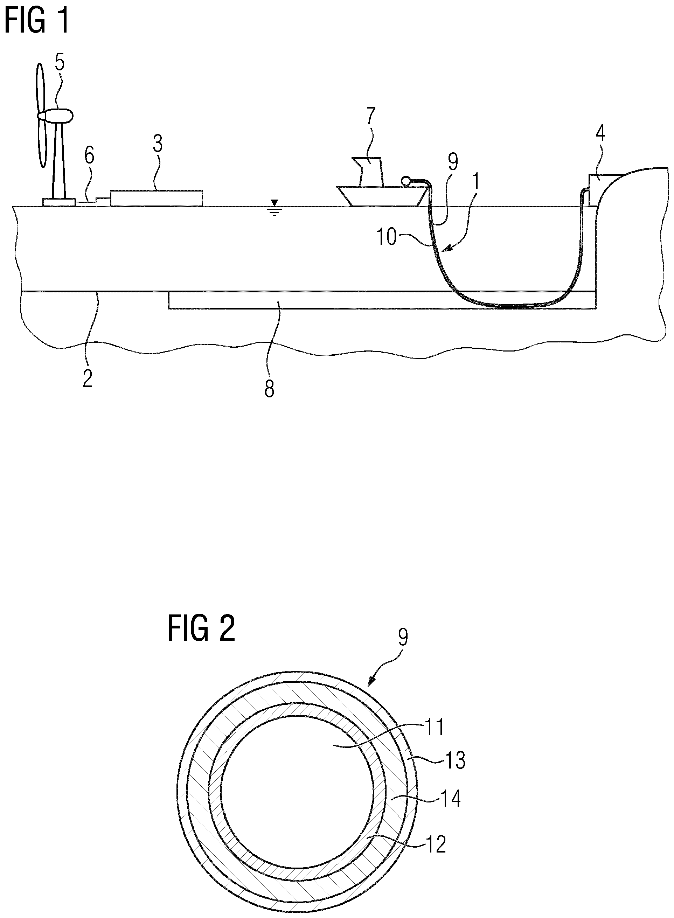

In fig. 1, a method for installing a gas transportation arrangement 1 on a seabed 2 between an offshore facility 3 and at least one further facility 4 is shown. The offshore facility 3 is an electrolysis facility, which produces gas, in particular hydrogen and/or oxygen, using electrical energy produced by a wind turbine 5 connected to the offshore facility 3 via a connection 6. As technique used for the electrolysis, alkaline electrolysis, proton exchange membrane (PEM) electrolysis, anion exchange membrane (AEM) electrolysis and/or high temperature electrolysis (HTEL) may be used.

The gas transportation arrangement 1, which is installed between the offshore facility 3 and the further facility 4, is used to transfer gas created during the electrolysis process in the offshore facility 3 to the further facility 4. The further facility 4 is located onshore and is adapted to receive in particular the hydrogen gas created at the offshore facility 3. Therefore, the gas transportation arrangement 1 has to be arranged connecting the offshore facility 3 and the further facility 4. Additionally or alternatively to the hydrogen, also other types of gases, for instance methane or ammonia, may be transported between the offshore facility 3 and the further facility 4 using the gas transportation arrangement 1.

The gas transportation arrangement 1 is lowered to the seabed 2 from the deck of a vessel 7. The gas transportation arrangement 1 may be arranged directly on the seabed 2 or a trench 8 may be ploughed or excavated prior to the lowering of the gas transportation arrangement 1 on the seabed 2, so that the gas transportation arrangement 1 is arranged in the trench 8. After depositing the gas transportation arrangement 1 in the trench 8, the trench 8 may be closed, or filled, respectively, using soil and/or sea ground for fixating the gas transportation arrangement 1 in the seabed 2.

As will be described in the following in more detail, the gas transportation arrangement 1 comprises at least one gas transportation tube 9 used for transporting gas, in particular hydrogen, from the offshore facility 3 to the further facility 4. Additionally, the gas transportation arrangement 1 comprises at least one weight means 10, which is coupled to the gas transportation tube 9 to counteract a buoyancy of the at least one gas transportation tube 9, so that the gas transportation arrangement 1 remains on the seabed 2.

As the at least one weight means 10 of the gas transportation arrangement 1, a further tube at least partly filled with a liquid medium is used. The weight means 10 extends almost entirely over the distance bridged by the gas transportation tube 9 of the gas transportation arrangement 1. During installation, the weight means 10 of the gas transportation arrangement 1 ensures a stable resting of the gas transportation arrangement on the seabed 2.

After installation of the gas transportation arrangement 1, the weight means 10 may be advantageously used for an additional purpose in between the offshore facility 3 and the further facility 4. Therefore, a weight means 10 is used that extends almost entirely over the distance bridge by the gas transportation arrangement 1, in particular over the distance, in which the gas transportation arrangement 1 is arranged under water, especially the distance in which the gas transportation arrangement 1 is arranged on the seabed 2.

The coupling of the one or more gar transportation tubes 9, the one or more weight means and/or one or more additional components of the gas transportation arrangement 1 may occur in all embodiments by the usage of at least one coupling means, wherein a bonded connection and/or an adhesive connection between the tubes and/or a steel band fastener or a tape wound around an outer circumference of a bundle of components of the gas transportation arrangement 1 are used as coupling means. Additionally or alternatively, a coupling of the components of the gas transportation arrangement may occur using a shield layer surrounding the components.

In fig. 2, an embodiment of a gas transportation tube 9 for a gas transportation arrangement 1 is shown. The gas transportation tube 9 is adapted for a transport of hydrogen in an interior 11 of the tube 9. The gas transportation tube 9 comprises an inner layer 12 surrounding the interior 11 of the gas transportation tube 9. The gas transportation tube 9 comprises further an outer layer 13 and a middle layer 14 arranged in between the inner layer 12 and the outer layer 13. The inner layer 12 and the outer layer 13 may consist in particular of a plastic material, for instance polyethylene (PE) and/or high-density polyethylene (HDPE), wherein the middle layer 14 is used as a hydrogen blocking portion. The middle layer 14 may consist for instance of steel, stainless steel, aluminium and/or another metal which blocks a diffusion of hydrogen encapsulated in the interior 11 of the gas transportation tube 9. The composition of the materials of the gas transportation tube 9 may be different in the end sections of the gas transportation tube 9, where the gas transportation tube 9 is connected to termination parts for entry into a structure or the like of the offshore facility 3, or the further facility 4, respectively.

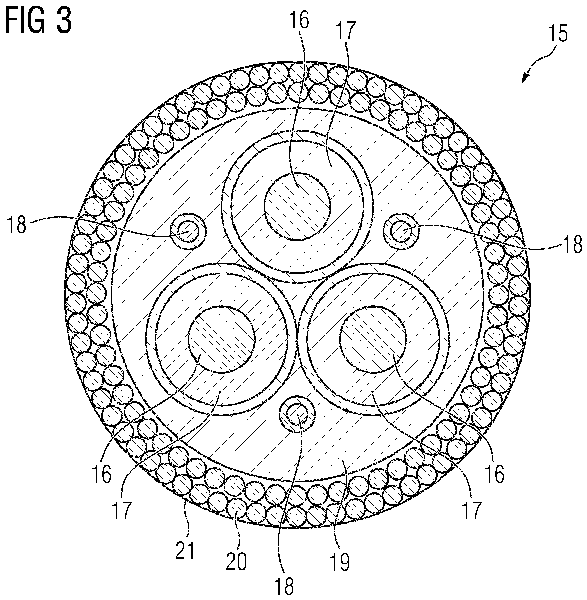

In fig. 3, an embodiment of an electrical power cable 15 used as weight means 10 is shown. This embodiment is not according to the claimed invention. The electrical power cable 15 is a multicore cable comprising three conductors 16 adapted for guiding an alternating current, for instance at a voltage level between 100 kV and 500 kV, in particular 132 kV, 220 kV, or 400 kV. The electrical power cable 15 may be used to transfer electrical power of at least one wind turbine 5 and/or electrical power, which is not used in the offshore facility 3, from the offshore facility 3 to the further facility 4 or vice versa.

Each of the conductors 16 comprises an insulation 17 arranged around the conductor 16. The electrical power cable 15 further comprises three communication cables 18, which each comprise a bundle of glass fibres and which are embedded together with the conductors 16 and the insulation 17 in an additional insulating material 19. The electrical power cable 15 is surrounded by an armour 20, for instance comprising a plurality of steel rods, which are embedded in an outer serving 21, for instance a layer of yarn and/or bitumen.

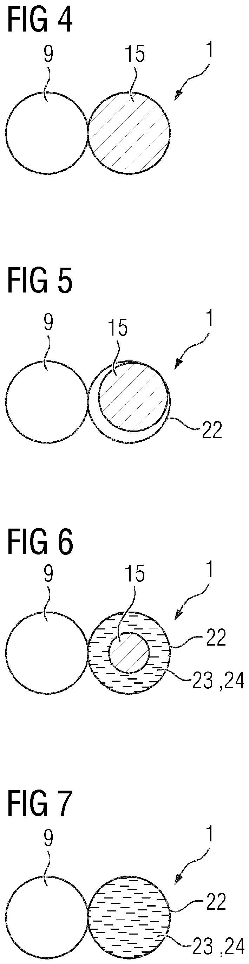

In fig. 4, an embodiment of a gas transportation arrangement 1 is depicted. This embodiment is not according to the claimed invention.

The gas transportation arrangement 1 comprises a gas transportation tube 9 and an electrical power cable 15. It is in particular possible that in this and in the further embodiments, the gas transportation tube 9 is provided as depicted in fig. 2. As electrical power cable 15, an embodiment of an electrical power cable 15 like shown in fig. 3 can be used in this and in the further embodiments comprising an electrical power cable 15. Alternatively, a single core electrical power cable 15 comprising one single core 16 may be used and/or unarmoured electrical power cables without armour 20 and/or outer serving 21 may be used.

For forming the gas transportation arrangement 1, the gas transportation tube 9 is coupled to the electrical power cable 15, where the electrical power cable 15 is used as weight means 10 of the gas transportation arrangement 1 to counteract a buoyancy of the gas transportation tube 9, hence to prevent the gas transportation arrangement 1 from floating when being arranged under water.

In fig. 5, a second embodiment of a gas transportation arrangement 1 is shown. This embodiment is not according to the claimed invention. The gas transportation arrangement 1 comprises a gas transportation tube 9 and an electrical power cable 15 arranged inside a further tube 22. The gas transportation tube 9 is coupled to the further tube 22, wherein the electrical power cable 15 arranged in the further tube 22 is used as weight means 10 for counteracting the buoyancy of the gas transportation tube 9. The arrangement of the electrical power cable 15 inside a further tube 22 is in particular advantageous, if an unarmoured electrical power cable 15 is used, since by the further tube 22, an additional protection of the electrical power cable 15 is achieved.

In fig. 6, a third embodiment of a gas transportation arrangement 1 is shown. The gas transportation arrangement 1 comprises a gas transportation tube 9 as well as a further tube 22, wherein an electrical power cable 15 is arranged in the further tube 22. Furthermore, an interior 23 of the further tube is filled with a liquid medium 24. The medium 24 may be for instance water, which is filled in the interior 23 surrounding the electrical power cable 15, so that the electrical power cable 15 may be cooled after installation of the gas transport arrangement 1 and/or during operation of the gas transportation arrangement 1 using the water in the interior 23 of the further tube 22 and/or a thermal connection created by the water in the interior 23 of the further tube 22 to the surrounding seawater at the seabed 2.

In this embodiment, both the electrical power cable 15 and the further tube 22 can be used as weight means increasing the weight of the gas transportation arrangement 1 so that a stable and secure arrangement of the gas transportation arrangement 1 at the seabed 2 may be conducted.

In fig. 7, a fourth embodiment of a gas transportation arrangement 1 is shown. The gas transportation arrangement 1 comprises a gas transportation tube 9 and a further tube 22, wherein the interior 23 of the further tube 22 is filled with the liquid medium 24. In this embodiment, the further tube 22 is used as a weight means increasing the weight of the gas transportation arrangement 1. The further tube 22 may be filled with a material like water and/or with a liquid comprising a higher density than the seawater, for instance an oil or the like.

The medium 24 may be in particular a mixture of a liquid and a solid, which has a higher density than water increasing the weight of the gas transportation arrangement 1, for instance a mixture of water and a clay, in particular a mixture of water and bentonite, which significantly increases the weight of the further tube 22, or the gas transportation arrangement 1, respectively.

In an embodiment not according to the claimed invention, it is also possible that as the medium 24, a solid material, for instance a solidified liquid, which is solidified after being filled into the tube 22, is used. A further tube 22 filled with a solid material is in particular advantageous, when the gas transportation arrangement 1 is not arranged within a trench 8 on the seabed 2, for permanently providing a weight sufficient for fixating the gas transportation arrangement 1 on the seabed 2.

The usage of a liquid medium 24 has the advantage that after installation of the gas transportation arrangement 1, the liquid medium 24 can be removed from the interior 23 of the further tube 22, so that the further tube 22 may be used for a further purpose. For instance, the further tube 22 may be used to connect the offshore facility 3 to the further facility 4 and for supplying a tempering medium, a consumable medium and/or a maintenance medium to the offshore facility 3 or the further facility 4, respectively. For instance, the further tube 22 may be used for providing fresh water to an offshore facility 3 comprising an electrolysis apparatus, so that the electrolysis can be performed with fresh water supply via the further tube 22 instead of using the seawater surrounding the offshore platform 3. Additionally or alternatively, the or a further tube 22 may be used for providing a maintenance medium like oil or another lubricant to the offshore facility 3. Also a tempering medium for heating and/or cooling at the offshore facility 3, or for heating and/or cooling of the gas transport arrangement 1, respectively, may be provided using the or a further tube 22.

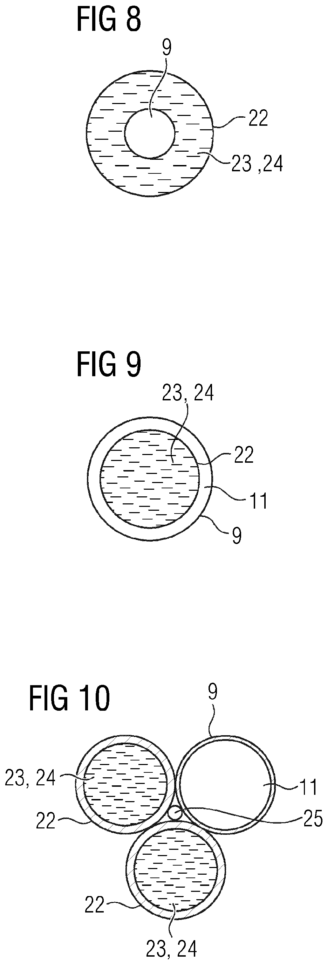

In fig. 8, a fifth embodiment of a gas transportation arrangement 1 is shown. In this embodiment, the gas transportation tube 9 is arranged inside the interior 23 of the further tube 22. Hence, the gas transportation tube 9 is surrounded by the medium 24 filled in the interior 23 of the further tube 22.

In fig. 9, a sixth embodiment of a gas transportation arrangement 1 is shown. In this embodiment, the further tube 22 is arranged in the interior 11 of the gas transportation tube 9.

In both the fifth embodiment depicted in fig. 8 and the sixth embodiment depicted in fig. 9, a liquid medium 24 filled in the interior 23 of the further tube 22 may be used to cool and/or heat the gas transportation tube 9 or a gas transported in the gas transportation tube 9, respectively.

In fig. 10, a seventh embodiment of a gas transportation arrangement 1 is shown comprising a gas transportation tube 9 and two further tubes 22 filled at least partly with a liquid medium 24. Furthermore, the gas transportation arrangement 1 comprises in this embodiment an additional component 25, which may be a communication cable, a metal cable like, at least one cable-like measurement device and/or at least one supporting structure.

For instance, a glass fibre cable may be provided as component 25 in between the gas transportation tube 9 and the further tubes 22 arranged for exhibiting essentially a triangular cross-section of the gas transportation arrangement 1. As additional component 25 also a metal cable, for instance a steel cable, and/or at least one cable-like measurement device for measuring a temperature and/or a vibration of the gas transportation arrangement 1 may be used. As cable-like measurement device, for instance one or more glass fibres for measuring a temperature and/or a vibration of the gas transportation arrangement 1 may be used. Also a temperature sensor connected to one or more cables may be used as component 25.

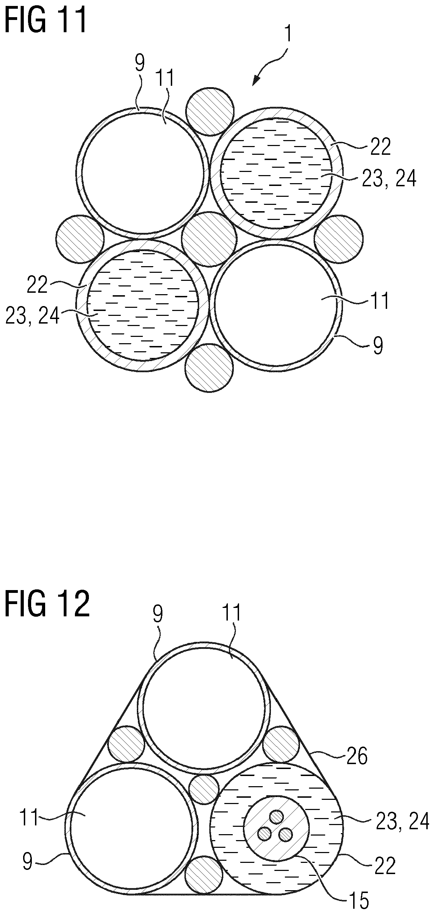

In fig. 11, an eighth embodiment of a gas transportation arrangement 1 is shown. In this embodiment, the gas transportation arrangement 1 comprises two gas transportation tubes 9 and two further tubes 22 as weight means. Furthermore, the gas transportation arrangement 1 comprises five additional components 25, which each may be a communication cable, a metal cable, a cable-like measurement device and/or a supporting structure supporting the gas transportation tubes 9 and the further tubes 22 against each other.

All components of the transportation arrangement 1 are arranged such that a bundle is formed which comprises a high fill factor of the quadrangular cross-sectional area of the bundle. Therefore, the components with smaller radii, here the additional components 25, are arranged in between two or more of the gas transportation tubes and/or the further tubes 22, which comprise a larger diameter. It is also possible that also the diameter of the gas transportation tubes 9 and/or the further tubes 22 are different.

In fig. 12, a nineth embodiment of a gas transportation arrangement 1 is shown. In this embodiment, an electrical power cable 15 arranged inside a further tube 22 is used as a weight means for counteracting the buoyancy of the two gas transportation tubes 9 of the transportation arrangement 1. Furthermore, the gas transportation arrangement 1 comprises four additional components 25, as previously described. It is in particular possible that at least one of the additional components 25 arranged adjacent to the further tube 22 surrounding the electrical power cable 15 is used for temperature measurement, so that for instance water can be applied to the interior 23 as liquid medium 24 during or after the installation of the gas transportation arrangement 1 for cooling the electrical power cable 15 using a flow of water in the interior 23 of the further tube 22. The components are coupled together using a coupling means 26 surrounding an outer circumference of the bundle of components, wherein for instance a steel band fastener is used as coupling means 26.

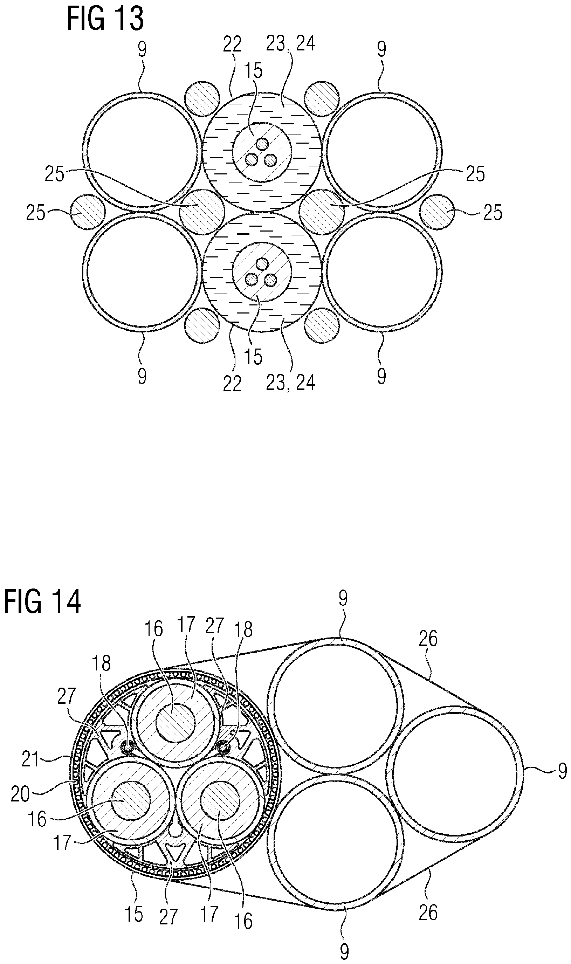

In fig. 13, a tenth embodiment of a gas transportation arrangement 1 is shown. In this embodiment, the gas transportation arrangement 1 comprises four gas transporting tubes 9 and two further tubes 22, which surround an electrical power cable 15 arranged in the interior 23 of the respective further tubes 22. In this embodiment, the further tubes 22 and the electrical power cables 15 are used as weight means supplying weight to the gas transportation arrangement 1. Furthermore, the gas transportation arrangement 1 comprises eight additional components 25. It is in particular possible that the two additional components 25 arranged each in the middle of the bundle in between the two further tubes 22 and two of the gas transportation tubes 9 are communication cables and/or unshielded electrical power cables, since a protection of these components 25 is obtained by the further tubes 22 and the gas transportation tubes 9. The additional components 25 arranged on the outer circumference of the bundle may be for instance steel cables, adding additional weight and stability to the gas transportation arrangement 1.

In fig. 14, an eleventh embodiment of a gas transportation arrangement 1 is shown. This embodiment is not according to the claimed invention. The gas transportation arrangement 1 comprises an electrical power cable 15 as weight means 12 as well as three gas transportation tubes 9. The gas transportation arrangement 1 comprises further a coupling means 26 surrounding the gas transportation tubes 9 and the electrical power cable 15.

The electrical power cable 15 comprises three electrical conductors 16, which are each surrounded by the insulating layer 17. Furthermore the electrical power cable 15 is surrounded by a shield 20 consisting at least partly of metal rods, wherein the shield 20 is surrounded by the outer serving 21 comprising at least partly of yarn and/or bitumen. The electrical power cable 15 comprises two communication cables 18 as well as three supporting elements 27 supporting the conductors 16 and/or the communication cables 18 against each other providing a circular outer circumference of the electrical power cable 15, which is wrapped by the shield 20.

As previously described, the coupling means 26 may be a band fastener like a steel band fastener or a tape surrounding the components of the gas transportation tube 1. It is in particular possible that more than one coupling means 26 is arranged at the outside of the gas transportation arrangement 1 in particular in regular intervals, for instance once every few meters.

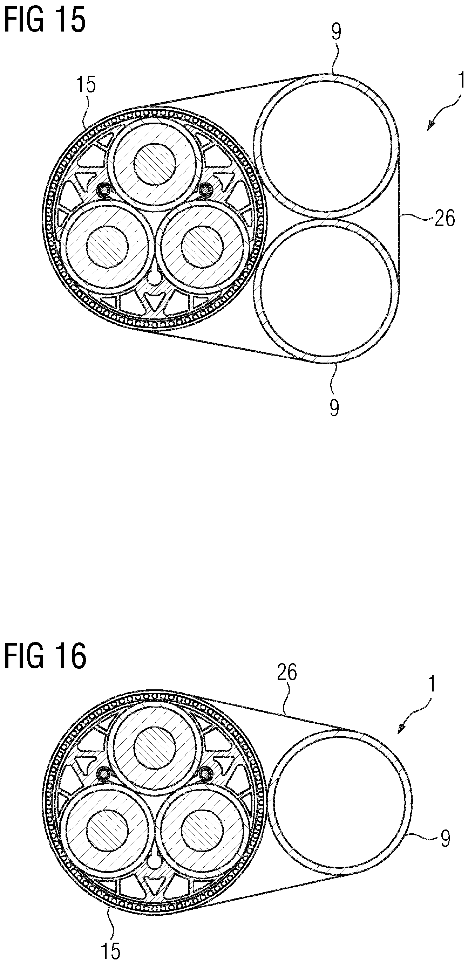

In fig. 15, a twelfth embodiment and in fig. 16 a thirteenth embodiment of a gas transportation arrangement 1 are shown.

These embodiments are not according to the claimed invention and correspond to the eleventh embodiment shown in fig. 14, wherein in the twelfth embodiment, a gas transportation arrangement comprising two gas transportation tubes 9 is depicted. In the thirteenth embodiment, the gas transportation arrangement 1 comprises one gas transporting tube 9, which has a diameter smaller than the diameter of the electrical power cable 15 used as weight means of the gas transportation arrangement 1.

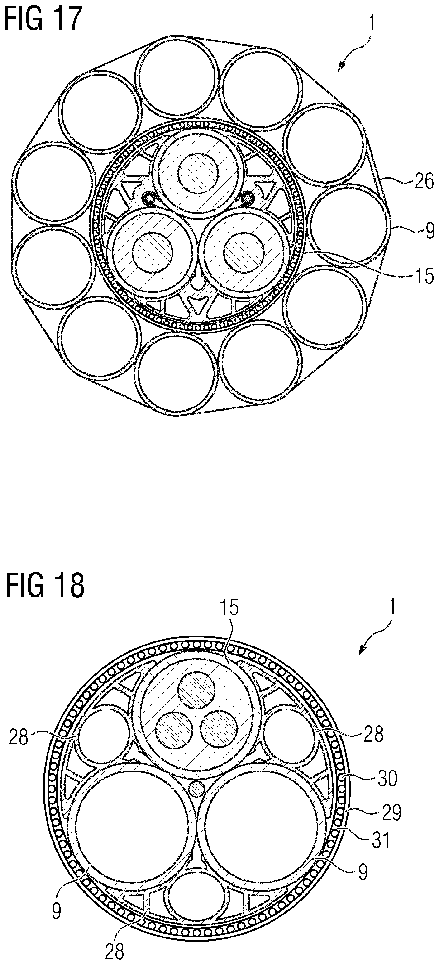

In fig. 17, a fourteenth embodiment of a gas transportation arrangement 1 is shown comprising an electrical power cable 15 as weight means as well as eleven gas transportation tubes 9, which are arranged circumferentially around the electrical power cable 15 located in the centre of the bundle. This embodiment is not according to the claimed invention.

The electrical power cable 15 is provided as described in conjunction with the eleventh embodiment depicted in fig. 14. Instead of eleven gas transporting tubes 9, also a larger or smaller number of gas transporting tubes 9, may be arranged circumferentially around the other surface of the electrical power cable 15, in particular such that a circular cross-sectional area of the bundle is obtained.

In Fig. 18, a fifteenth embodiment of a gas transportation arrangement 1 is shown. This embodiment is not according to the claimed invention. In this embodiment, an electrical power cable 15 is used as weight means for two gas transportation tubes 9 of the gas transportation arrangement 1. To obtain a circular shape of the cross section, three supporting structures 28 are provided as additional components of the gas transportation arrangement 1. These supporting structures 28 are arranged in between the two gas transportation tubes or one of the gas transportation tubes 9 and the electrical power cable 15, respectively, so that overall a circular cross-sectional area of the gas transportation arrangement 1 is obtained. The components of the gas transport arrangement 1 are surrounded by a shield layer 29, which couples the components together. The shield layer 29 surrounds the components and comprises a plurality of metal rods 30 providing a shielding and/or an armouring of the components of the gas transportation arrangement 1. The rods 30 are surrounded by a protective layer 31, which may consist for instance of bitumen and/or yarn providing a protection of the components of the gas transportation arrangement 1 from environmental influences at the seabed 2.

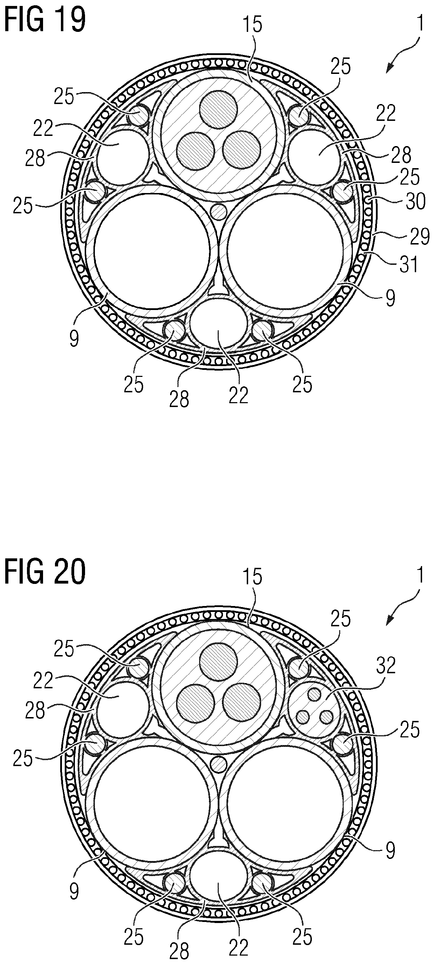

In fig. 19, a sixteenth embodiment of a gas transportation arrangement 1 is shown, wherein the gas transportation arrangement 1 comprises an electrical power cable 15 as weight means as well two gas transporting tubes 9. This embodiment is not according to the claimed invention.

The gas transportation arrangement 1 comprises six additional components 25 as well as three further tubes 22. Furthermore, the gas transportation arrangement comprises three supporting structures 28, which each surround one of the further tubes 22 as well as two of the additional components 25. The additional component 25 may each be a communication cable, a metal cable and/or a cable-like measurement device as previously described. The supporting structures 28 provide an essentially circular outer circumference of the components of the gas transportation arrangement 1 arranged in a bundle. The components of the gas transportation arrangement 1 are coupled by the shield layer 29.

It is in particular possible that one or more of the further tubes 22 are used to provide a tempering medium like cooling water for cooling and/or heating of the gas transportation tubes 9 and/or the electrical power cable 15, a maintenance medium and/or a consumption medium to the offshore facility 3 and/or the further facility 4, respectively. The components of the gas transportation arrangement 1 are coupled by the shield layer 29.

In fig. 20, a seventeenth embodiment of the invention is shown. This embodiment is not according to the claimed invention.

This embodiment resembles the sixteenth embodiment, wherein one of the further tubes 22 has been replaced by an additional power conductor 32. The additional power conductor 32 comprises a smaller diameter than the power cable 15, so that for instance the power cable 15 can be used to conduct power from offshore wind turbines 5 to the further facility 4, wherein the additional electrical power cable 32 is used to provide starting energy or the like from the further facility 4 to the offshore facility 3. It is in particular possible that also one of the other further tubes 22 shown in the sixteenth embodiment is replaced by an additional electrical power cable 32.

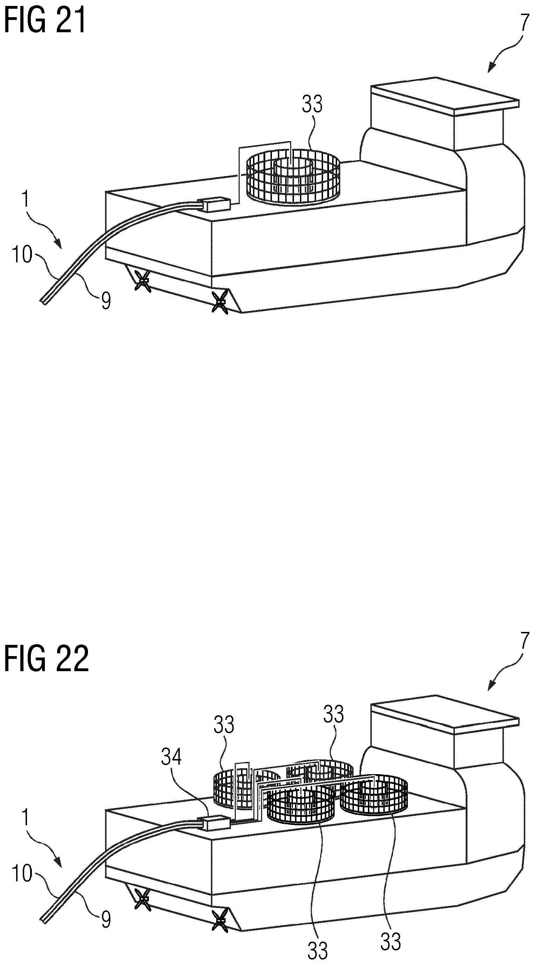

In fig. 21, a vessel 7 used in an embodiment of a method for installing a gas transportation arrangement 1 is shown. The vessel comprises a storage drum 33, on which the gas transportation arrangement 1 is provided in a coupled state. For lowering the gas transportation arrangement 1 on the seabed, the storage drum 33 can be actuated so that the gas transportation arrangement 1 can be stooled from the storage drum 33 and lowered to the seabed 2. Beside the drum 33, also a turntable carrying the gas transportation arrangement 1 may be used.

In fig. 22, a further embodiment of a vessel 7 for usage in a method for installing a gas transportation arrangement 1 is shown. In this embodiment, the vessel 7 comprises a plurality of storage drums 33, which each store a different component or a combination of different components of the gas transportation arrangement 1. Using a coupling apparatus 34 of the vessel 7, the individual components, or groups of components, respectively, stored on the storage drums 33 are coupled and then lowered to the seabed 2 from the vessel 7.

In addition to the coupling apparatus 34, also a tensioning device (not depicted) can be used at the vessel 7 for tensioning the components, in particular to facilitate the usage of a coupling means like band fasteners, tapes, or the provision of a shielding around the individual components as coupling means, respectively.

With at least one further tube 22 used as weight means, it is also possible that the gas transportation arrangement 1 is arranged floating on a sea surface prior to a filling of the further tube 22 with a liquid medium. The gas transport arrangement may be dragged on the sea surface by a vessel, wherein by filling the liquid medium into the further tube used as a weight means, the weight, or the density, respectively, of the gas transportation arrangement may be increased to lower it from the sea surface to the seabed. The gas transportation arrangement 1 may be arranged on the sea surface for instance on the entire or almost the entire distance between the offshore facility 3 and the further facility 4.

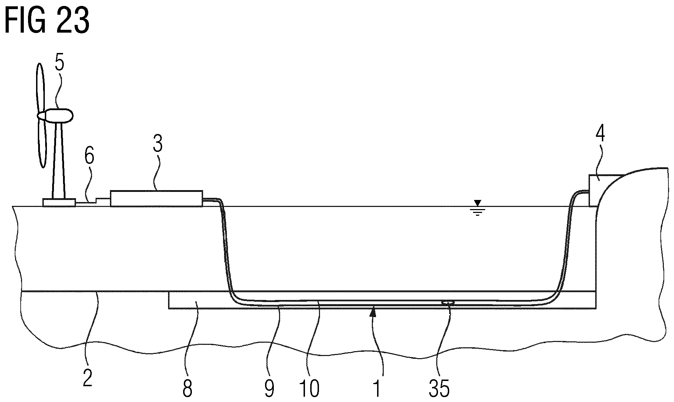

As is depicted in fig. 23, after installing the gas transportation arrangement 1 on, or in the seabed 2, respectively, the gas transportation arrangement 1 is connected to the offshore facility 3 and/or the further facility 4. In particular an electrical power cable 15 or a further tube 22 to us as a weight means 10 of the gas transportation arrangement 1 may be used for providing electricity and/or a fluid media from the offshore facility 3 to the further facility 4 or vice versa. Therefore, the further tube 22 is connected to a medium providing arrangement of the offshore facility 3 and/or of the further facility 4, wherein the medium providing arrangement is adapted to provide a tempering medium, a consumable medium and/or a maintenance medium to the further tube 22. It is also possible that in one or more of the further tubes 22, electrical cables like electrical power cables and/or electrical or optical communication cables are inserted connecting the offshore facility 3 and the further facility 4. After installation of the gas transportation arrangement 1, a measurement instrument 35 is moved through a tube of the gas transportation arrangement 1, for instance through one of the gas transportation tubes 9 and the further tube 22 to use as weight means 10 during the installation of the gas transportation arrangement 1. The measurement instrument 35 measure a course of the gas transportation arrangement 1 on the seabed 2 between the offshore facility 3 and the further facility 4. As measurement instrument 35, in particular an instrument within an instrument body movable by applying a fluid pressure to the tube is used. As measurement instrument 35, for instance a so-called pig can be used. Preferably, the measurement instrument 35 comprises a gyroscope sensor measuring for instance an acceleration in three orthogonal directions, so that based on the information collected during the movement of the measurement instrument 35 through for example a gas transportation tube 9, the course of the gas transportation arrangement 1 can be controlled.

Although the present invention has been described in detail with reference to the preferred embodiment, the present invention is not limited by the disclosed examples from which the skilled person is able to derive other variations without departing from the scope of the invention.

## Claims

1. Method for installing a gas transportation arrangement (1) on a seabed (2) between an offshore facility (3) and at least one further facility (4), wherein the gas transportation arrangement (1) comprises as components at least one gas transportation tube (9) and at least one weight means (10) extending almost entirely over the distance bridged by the gas transportation tube (9), wherein the gas transportation tube (9) and the weight means (10) are coupled prior to lowering the gas transportation arrangement (1) to the seabed (2),
wherein
a further tube (22) at least party filled with a liquid medium is used as weight means (10), wherein after lowering and arrangement of the gas transportation arrangement (1) on the seabed (2), the liquid medium used as filling material of the further tube (22) is removed from the further tube (22) and the further tube (22) is used for arrangement of an electrical conductor in the further tube (22).

2. Method according to claim 1, **characterized in that** at least one gas transportation tube (9) adapted for hydrogen transport is used, in particular that a gas transportation tube (9) comprising a tube wall with at least a hydrogen blocking portion is used and/or that at least one gas transportation tube adapted for methane transport and/or that at least one gas transportation tube adapted for ammonia transport is used.

3. Method according to one of the preceding claims, **characterized in that** the further tube (22) is arranged in the gas transportation tube (9), around the gas transportation tube (9) or adjacent to the gas transportation tube (9).

4. Method according to one of the preceding claims, **characterized in that** as medium filled in the further tube (22) and/or as a medium filled in the gas transportation tube (9), water, oil, and/or a suspension comprising water and a sediment, in particular water and a clay, is used.

5. Method according to one of the preceding claims, **characterized in that** after lowering of the gas transportation arrangement (1) on the seabed (2), a liquid medium used as filling material of the gas transportation tube (9) is removed from the gas transportation tube (9).

6. Method according to one of the preceding claims, **characterized in that** the further tube (22) is connected to a medium providing arrangement of the offshore facility (3) and/or of the further facility (4), wherein the medium providing arrangement is adapted to provide a tempering medium, a consumable medium and/or a maintenance medium to the further tube (22).

7. Method according to one of the preceding claims, **characterized in that** at least one communication cable (18), at least one metal cable, at least one cable-like measurement device and/or at least one supporting structure are used as components (25) of the gas transportation arrangement (1), wherein the communication cable, the cable-like measurement device, the metal cable and/or the supporting structure (28) are coupled to the gas transportation tube (9) and/or the weight means (10) prior to a lowering of the gas transportation arrangement (1) on the seabed (2).

8. Method according to one of the preceding claims, **characterized in that** the components of the gas transportation arrangement (1) are arranged in a bundle, in particular a bundle with an essentially circular, essentially oval, essentially triangular or essentially quadrangular cross-sectional area.

9. Method according to one of the preceding claims, **characterized in that** the components of the gas transportation arrangement (1) are coupled using at least one coupling means (26), wherein as coupling means (26) in particular an adhesive connection, a bonded connection, a band fastener and/or a tape is used.

10. Method according to one of the preceding claims, **characterized in that** the components of the gas transportation arrangement are coupled by a shield layer (29) surrounding an outer circumference of the gas transportation arrangement (1).

11. Method according to one of the preceding claims, **characterized in that** the gas transportation arrangement (1) is lowered to the seabed (2) from a vessel (7), wherein the gas transportation arrangement (1) is provided on the vessel (7) in a coupled state or wherein the components of the gas transportation arrangement (1) are provided at least partly separated, wherein the components are coupled on the vessel (7), in particular by using a coupling apparatus (34).

12. Method according to claim 11, **characterized in that** the gas transportation arrangement (1) or the components of the gas transportation arrangement (1) are provided wound up on at least one storage drum (33) and/or at least one turntable arranged on the vessel (7).

13. Method according to one of the preceding claims, **characterized in that** the gas transportation arrangement (1) is arranged floating on a sea surface prior to a filling of the further tube (22) with the liquid medium.

14. Method according to one of the preceding claims, **characterized in that** prior to the lowering of the gas transportation arrangement (1) on the seabed (2), a trench (8) is formed on the seabed (2), wherein the gas transportation arrangement (1) is arranged in the trench (8) .

15. Method according to one of the preceding claims, **characterized in that** after arrangement of the gas transportation arrangement (1) on the seabed (2), a measurement instrument (35) is moved through a tube of the gas transportation arrangement (1), wherein the measurement instrument (35) measures a course of the gas transportation arrangement (1).

16. Method according to claim 15, **characterized in that** a measurement instrument (35) comprising at least one gyroscope sensor and/or an instrument body movable by applying a fluid pressure to the tube is used.

17. Method according to one of the preceding claims, **characterized in that** as offshore facility (3), an electrolysis facility is used, wherein gas produced by the electrolysis facility is transported using the gas transportation arrangement (1).

## Patentansprüche

1. Verfahren zum Installieren einer Gastransportanordnung (1) unter Wasser (2) zwischen einer Offshore-Anlage (3) und zumindest einer weiteren Anlage (4), wobei die Gastransportanordnung (1) als Komponenten zumindest ein Gastransportrohr (9) und zumindest eine Gewichtsmittel (10), das sich beinahe vollständig über den Abstand erstreckt, der durch das Gastransportrohr (9) überbrückt wird, umfasst, wobei das Gastransportrohr (9) und das Gewichtsmittel (10) vor dem Absenken der Gastransportanordnung (1) auf den Meeresgrund (2) gekoppelt werden, wobei ein weiteres Rohr (22), das zumindest teilweise mit einem flüssigen Medium gefüllt ist, als Gewichtsmittel (10) verwendet wird, wobei nach dem Absenken und Anordnen der Gastransportanordnung (1) auf dem Meeresgrund (2) das flüssige Medium, das als Füllmaterial des weiteren Rohres (22) verwendet wird, aus dem weiteren Rohr (22) entfernt wird und das weitere Rohr (22) verwendet wird zur Anordnung eines elektrischen Leiters in dem weiteren Rohr (22).

2. Verfahren nach Anspruch 1, **dadurch gekennzeichnet, dass** zumindest ein für Wasserstofftransport angepasstes Gastransportrohr (9) verwendet wird, insbesondere dadurch, dass ein Gastransportrohr (9) verwendet wird, das eine Rohrwand mit zumindest einem Wasserstoffblockierabschnitt umfasst und/oder dadurch, dass zumindest ein für Methantransport angepasstes Gastransportrohr und/oder dass zumindest ein für Ammoniaktransport angepasstes Gastransportrohr verwendet wird.

3. Verfahren nach einem der vorhergehenden Ansprüche, **dadurch gekennzeichnet, dass** das weitere Rohr (22) in dem Gastransportrohr (9), um das Gastransportrohr (9) herum oder angrenzend an das Gastransportrohr (9), angeordnet ist.

4. Verfahren nach einem der vorhergehenden Ansprüche, **dadurch gekennzeichnet, dass** als ein Medium, das in dem weiteren Rohr (22) eingefüllt ist, und/oder als ein Medium, das in dem Gastransportrohr (9) eingefüllt ist, Wasser, Öl und/oder eine Suspension, umfassend Wasser und ein Sediment, insbesondere Wasser und Lehm, verwendet wird.

5. Verfahren nach einem der vorhergehenden Ansprüche, **dadurch gekennzeichnet, dass** nach dem Absenken der Gastransportanordnung (1) auf den Meeresgrund (2) ein flüssiges Medium, das als Füllmaterial des Gastransportrohrs (9) verwendet wird, aus dem Gastransportrohr (9) entfernt wird.

6. Verfahren nach einem der vorhergehenden Ansprüche, **dadurch gekennzeichnet, dass** das weitere Rohr (22) mit einer Medienbereitstellungsanordnung der Offshore-Anlage (3) und/oder der weiteren Anlage (4) verbunden ist, wobei die Medienbereitstellungsanordnung angepasst ist zum Bereitstellen eines Temperierungsmediums, eines Verbrauchsmediums und/oder eines Wartungsmediums für das weitere Rohr (22).

7. Verfahren nach einem der vorhergehenden Ansprüche, **dadurch gekennzeichnet, dass** zumindest ein Kommunikationskabel (18), zumindest ein Metallkabel, zumindest eine kabelartige Messvorrichtung und/oder zumindest eine Stützstruktur als Komponenten (25) der Gastransportanordnung (1) verwendet werden, wobei das Kommunikationskabel, die kabelartige Messvorrichtung, das Metallkabel und/oder die Stützstruktur (28) vor dem Absenken der Gastransportanordnung (1) auf den Meeresgrund (2) mit dem Gastransportrohr (9) und/oder dem Gewichtsmittel (10) gekoppelt werden.

8. Verfahren nach einem der vorhergehenden Ansprüche, **dadurch gekennzeichnet, dass** die Komponenten der Gastransportanordnung (1) in einem Bündel angeordnet sind, insbesondere einem Bündel mit einer im Wesentlichen kreisrunden, im Wesentlichen ovalen, im Wesentlichen dreieckigen oder im Wesentlichen viereckigen Querschnittsfläche.

9. Verfahren nach einem der vorhergehenden Ansprüche, **dadurch gekennzeichnet, dass** die Komponenten der Gastransportanordnung (1) unter Verwendung zumindest eines Kopplungsmittels (26) gekoppelt sind, wobei als Kopplungsmittel (26) insbesondere eine Klebstoffverbindung, eine Haftverbindung, ein Bandbefestigungsmittel und/oder ein Klebeband verwendet wird.

10. Verfahren nach einem der vorhergehenden Ansprüche, **dadurch gekennzeichnet, dass** die Komponenten der Gastransportanordnung durch eine Schutzschicht (29) gekoppelt sind, die einen äußeren Umfang der Gastransportanordnung (1) umgibt.

11. Verfahren nach einem der vorhergehenden Ansprüche, **dadurch gekennzeichnet, dass** die Gastransportanordnung (1) von einem Schiff (7) aus auf den Meeresgrund (2) abgesenkt wird, wobei die Gastransportanordnung (1) auf dem Schiff (7) in einem gekoppelten Zustand bereitgestellt ist oder wobei die Komponenten der Gastransportanordnung (1) zumindest teilweise getrennt bereitgestellt sind, wobei die Komponenten auf dem Schiff (7) gekoppelt werden, insbesondere unter Verwendung einer Kopplungseinrichtung (34).

12. Verfahren nach Anspruch 11, **dadurch gekennzeichnet, dass** die Gastransportanordnung (1) oder die Komponenten der Gastransportanordnung (1) aufgewickelt auf zumindest eine Speichertrommel (33) und/oder eine Drehstation, die auf dem Schiff (7) angeordnet ist, bereitgestellt werden.

13. Verfahren nach einem der vorhergehenden Ansprüche, **dadurch gekennzeichnet, dass** die Gastransportanordnung (1) vor dem Füllen des weiteren Rohres (22) mit dem flüssigen Medium auf einer Meeresoberfläche schwimmend angeordnet ist.

14. Verfahren nach einem der vorhergehenden Ansprüche, **dadurch gekennzeichnet, dass** vor dem Absenken der Gastransportanordnung (1) auf den Meeresgrund (2) ein Graben (8) auf dem Meeresgrund (2) gebildet wird, wobei die Gastransportanordnung (1) in dem Graben (8) angeordnet wird.

15. Verfahren nach einem der vorhergehenden Ansprüche, **dadurch gekennzeichnet, dass** nach Anordnen der Gastransportanordnung (1) auf dem Meeresgrund (2) ein Messinstrument (35) durch ein Rohr der Gastransportanordnung (1) bewegt wird, wobei das Messinstrument (35) einen Verlauf der Gastransportanordnung (1) misst.

16. Verfahren nach Anspruch 15, **dadurch gekennzeichnet, dass** ein Messinstrument (35) verwendet wird, das zumindest einen Gyroskopsensor und/oder einen Instrumentenkörper, der durch Anwenden eines Fluiddrucks auf das Rohr bewegbar ist, umfasst.

17. Verfahren nach einem der vorhergehenden Ansprüche, **dadurch gekennzeichnet, dass** als Offshore-Anlage (3) eine Elektrolyseanlage verwendet wird, wobei Gas, das durch die Elektrolyseanlage produziert wird, unter Verwendung der Gastransportanordnung (1) transportiert wird.

## Revendications

1. Procédé d'installation d'un agencement (1) de transport de gaz sur un fond (2) marin entre une installation (3) en mer et au moins une autre installation (4), dans lequel l'agencement (1) de transport de gaz comprend comme constituants au moins un tube (9) de transport de gaz et au moins un moyen (10) d'alourdissement, s'étendant presque entièrement sur la distance couverte par le tube (9) de transport de gaz, dans lequel le tube (9) de transport de gaz et le moyen (10) d'alourdissement sont accouplés avant d'abaisser l'agencement (1) de transport de gaz au fond (2) marin, dans lequel un autre tube (22), rempli au moins en partie d'un milieu liquide, est utilisé comme moyen (10) d'alourdissement, dans lequel, après abaissement et mise de l'agencement (1) de transport de gaz sur le fond (2) marin, le milieu liquide utilisé comme matière de remplissage de l'autre tube (22) est retiré de l'autre tube (22) et l'autre tube (22) est utilisé pour la mise d'un conducteur électrique dans l'autre tube (22).

2. Procédé suivant la revendication 1,
**caractérisé en ce qu'**au moins un tube (9) de transport de gaz agencé pour le transport de l'hydrogène est utilisé, en particulier **en ce qu'**un tube (9) de transport de gaz comprenant une paroi de tube ayant au moins une partie d'arrêt de l'hydrogène est utilisé et/ou **en ce qu'**au moins un tube de transport de gaz agencé pour le transport du méthane et/ou **en ce qu'**au moins un tube de transport de gaz est agencé pour le transport de l'ammoniac est utilisé.

3. Procédé suivant l'une des revendications précédentes, **caractérisé en ce que** l'autre tube (22) est disposé dans le tube (9) de transport de gaz, autour du tube (9) de transport de gaz ou au voisinage du tube (9) de transport de gaz.

4. Procédé suivant l'une des revendications précédentes, **caractérisé en ce qu'**on utilise comme milieu remplissant l'autre tube (22) et/ou comme milieu remplissant le tube (9) de transport de gaz, de l'eau, du pétrole et/ou une suspension comprenant de l'eau et un sédiment, en particulier de l'eau et une argile.

5. Procédé suivant l'une des revendications précédentes, **caractérisé en ce qu'**après avoir abaissé l'agencement (1) de transport de gaz sur le fond (2) marin, on retire du tube (9) de transport de gaz un milieu liquide utilisé comme matière de remplissage du tube (9) de transport de gaz.

6. Procédé suivant l'une des revendications précédentes, **caractérisé en ce que** l'on relie l'autre tube (22) à un agencement, donnant un milieu, de l'installation (3) en mer et/ou de l'autre installation (4), dans lequel on adapte l'agencement donnant un milieu pour obtenir un milieu modérateur, un milieu consommable et/ou un milieu d'entretien à l'autre tube (22).

7. Procédé suivant l'une des revendications précédentes, **caractérisé en ce qu'**au moins un câble (18) de communication, au moins un câble métallique, au moins un dispositif de mesure analogue à un câble et/ou au moins une structure de support sont utilisés comme constituants (25) de l'agencement (1) de transport de gaz, dans lequel le câble de communication, le dispositif de mesure analogue à un câble, le câble métallique et/ou la structure (28) de support sont accouplés au tube (9) de transport de gaz et/ou au moyen (10) d'alourdissement avant d'abaisser l'agencement (1) de transport de gaz sur le fond (2) marin.

8. Procédé suivant l'une des revendications précédentes, **caractérisé en ce que** les constituants de l'agencement (1) de transport de gaz sont agencés en un faisceau, en particulier en un faisceau de section transversale sensiblement circulaire, sensiblement ovale, sensiblement triangulaire ou sensiblement quadrangulaire.

9. Procédé suivant l'une des revendications précédentes, **caractérisé en ce que** les constituants de l'agencement (1) de transport de gaz sont accouplés en utilisant au moins un moyen (26) d'accouplement, dans lequel on utilise comme moyen (26) d'accouplement, en particulier une connexion par adhésif, une connexion par une liaison, une attache à bande et/ou un ruban.

10. Procédé suivant l'une des revendications précédentes, **caractérisé en ce que** les constituants de l'agencement de transport de gaz sont accouplés par une couche (29) formant écran, entourant une circonférence extérieure de l'agencement (1) de transport de gaz.

11. Procédé suivant l'une des revendications précédentes, **caractérisé en ce que** l'agencement (1) de transport de gaz est abaissé au fond (2) marin à partir d'un bateau (7), dans lequel l'agencement (1) de transport de gaz est prévu sur le bateau (7) à l'état accouplé où dans lequel les constituants de l'agencement (1) de transport de gaz sont prévus au moins partiellement séparés, dans lequel les constituants sont accouplés dans le bateau (7), en particulier en utilisant une installation (34) d'accouplement.

12. Procédé suivant la revendication 11,
**caractérisé en ce que** l'agencement (1) de transport de gaz où les constituants de l'agencement (1) de transport de gaz sont prévus enroulés sur au moins un tambour (33) d'accumulation et/ou sur au moins une table tournante montée sur le bateau (7).

13. Procédé suivant l'une des revendications précédentes, **caractérisé en ce que** l'agencement (1) de transport de gaz est monté flottant sur une surface maritime avant de remplir l'autre tube (22) du milieu liquide.

14. Procédé suivant l'une des revendications précédentes,
**caractérisé en ce qu'**avant d'abaisser l'agencement (1) de transport de gaz sur le fond (2) marin, on forme une tranchée (8) sur le fond (2) marin, dans lequel on met l'agencement (1) de transport de gaz dans la tranchée (8).

15. Procédé suivant l'une des revendications précédentes,
**caractérisé en ce qu'**après avoir mis l'agencement (1) de transport de gaz sur le fond (2) marin, on déplace un instrument (35) de mesure dans un tube de l'agencement (1) de transport de gaz, dans lequel l'instrument (35) de mesure mesure une course de l'agencement (1) de transport de gaz.

16. Procédé suivant la revendication 15,
**caractérisé en ce qu'**on utilise un instrument (35) de mesure comprenant au moins un capteur à gyroscope et/ou un corps d'instrument mobile en appliquant une pression de fluide au tube.

17. Procédé suivant l'une des revendications précédentes, **caractérisé en ce qu'**on utilise comme installation (3) en mer, une installation d'électrolyse, dans lequel on transporte du gaz produit par l'installation d'électrolyse en utilisant l'agencement (1) de transport de gaz.
